# FASCICULE DE BREVET EUROPEEN

(11) **EP 4 022 249 B1**
(45) Date de publication et mention de la délivrance du brevet: **25.09.2024**
(21) Numéro de dépôt: 20775378.1
(22) Date de dépôt: 20.08.2020
(51) Int. Cl.: D03J 3/00, D03J 1/00, G01B 5/08

(54) **INSTALLATION DE TISSAGE PERMETTANT LA DÉTERMINATION DU NOMBRE DE FILAMENTS DANS UN TORON**
WEBEINRICHTUNG ZUR BESTIMMUNG DER ANZAHL VON FILAMENTEN IN EINEM FASERSTRANG
WEAVING DEVICE FOR DETERMINING THE NUMBER OF FILAMENTS IN A FIBRE TOW

(30) Priorité: 26.08.2019 FR 1909409
(43) Date de publication de la demande: 06.07.2022
(73) Titulaire: SAFRAN AIRCRAFT ENGINES, 75015 Paris (FR)
(72) Inventeur: CHARLEUX, François, 77550 MOISSY-CRAMAYEL (FR); BIENVENU, Steven Gérard Joseph, 77550 MOISSY-CRAMAYEL (FR)
(74) Mandataire: Gevers & Orès
(86) Numéro de dépôt international: PCT/FR2020/051488
(87) Numéro de publication internationale: WO 2021/038160

(56) Documents cités:
- FR-A- 1 249 226
- FR-A1- 2 684 460

## Description

### Domaine technique de l'invention

La présente invention concerne le domaine de la fabrication d'organe de turbomachine en matériau composite avec un renfort fibreux, en particulier de la fabrication par tissage de ce renfort fibreux. Elle vise notamment un dispositif permettant de déterminer la taille ou nombre de filament des torons utilisés pour réaliser le tissage dans une installation de tissage.

### Arrière-plan technique

L'état de la technique est par exemple illustré par le document FR-A1-1 249 226.

A ce jour, de nombreuses pièces conçues et produites dans le domaine de l'industrie aéronautique sont en composites et plus particulièrement en composites avec un renfort fibreux en tissé 2D et/ou 3D. De telles pièces sont par exemples des aubes ou des carters ou des OGV (« Outlet Guide Vanes ») des turbomachines telles que les LEAP ou GE9X. Ces pièces sont classiquement constituées d'un tissage de fils de carbone (ou de verre) injecté avec de la résine (souvent époxy). Un fil, aussi appelé toron, est un ensemble de filaments tournés. Chaque toron est constitué de plusieurs milliers de filaments de carbone. Les torons de carbone dont il est question ici sont les structures filamentaires que l'on voit par transparence de la résine. On parle, par exemple, de torons 3K, 12K, 24K qui sont composés respectivement de trois, douze ou vingt-quatre milliers de filaments. Une pièce de turbomachine telle qu'une aube est classiquement constituées de plusieurs tailles de torons et chacun d'entre eux a une place spécifique dans l'aube afin de lui conférer une résistance mécanique optimale.

Ainsi, lors du tissage avec un métier à tisser, des bobines de torons sont disposées sur des cantres, chaque toron est déroulé jusqu'à son emplacement dans le métier à tisser. Comme plusieurs tailles de torons sont utilisées pour les chaînes et les trames, la difficulté est de disposer les bobines contenant une taille de fil donné, dans le cantre correspondant.

Aujourd'hui se sont les opérateurs qui assurent le bon emplacement de la bobine avec la bonne taille de fil au niveau de la machine. Ils contrôlent la taille des fils en comptant le nombre de filaments le constituant.

Ce contrôle étant fastidieux, des erreurs peuvent être commises.. La prise de mesure ne peut pas se faire à l'aide d'un pied à coulisse ou une jauge d'épaisseur car le diamètre d'un toron n'est pas mesurable avec ce type d'outil : en effet, les filaments bougent et la section du toron n'est pas constante, ce qui ne permet pas de prendre la mesure du diamètre du toron. Enfin, puisque ce contrôle est manuel, aucune traçabilité ne peut être réalisée de façon automatique.

Une mauvaise taille de toron implique une mécanique modifiée ce qui a pour conséquence l'émission d'une dérogation et potentiellement la mise au rebus de la pièce. Cela entraine un coût non négligeable et des retards de livraison.

Le présent déposant s'est donc notamment fixé comme objectif de permettre une détermination précise, fiable, rapide et peu coûteuse du nombre de filaments dans un toron.

### Résumé de l'invention

On parvient à cet objectif conformément à l'invention grâce à une installation de tissage comprenant un métier à tisser destiné à recevoir une série de torons, et au moins un dispositif de mesure de diamètre d'un toron comportant un nombre défini de filaments, le dispositif comportant un diaphragme présentant une bague externe formant support sur laquelle sont fixées une série de lamelles formant un iris, les lamelles étant mobiles et permettant de définir, au centre de l'iris, un espace sensiblement circulaire de dimensions variables. L'au moins un diaphragme est configuré pour ajuster les dimensions de l'espace de manière à permettre à un toron du métier à tisser de le traverser, et d'enserrer le profil du toron, de sorte à permettre la détermination du nombre de filaments dudit toron.

Ainsi, cette solution permet d'atteindre l'objectif susmentionné. En particulier, l'ajustement de l'ouverture du diaphragme au contour du toron puis la mesure de cette ouverture permet de déterminer le nombre de filament dans le toron sans le défaire du métier à tisser.

L'installation selon l'invention peut comprendre une ou plusieurs des caractéristiques ci-dessous, prises isolément les unes des autres ou en combinaison les unes avec les autres :
- les lamelles de l'iris du diaphragme occupent une première position dans laquelle les lamelles enserrent le toron de manière à comprimer les filaments entre eux dans l'espace au centre de l'iris,
- le diaphragme est fixé au métier à tisser,
- le diaphragme est un diaphragme d'appareil photo,
- le diaphragme comporte un élément de contrôle,
- l'élément de contrôle est une graduation permettant un relevé de cote,
- l'élément de contrôle est un microprocesseur et le diaphragme comprend un moteur relié au microprocesseur,
- le microprocesseur est configuré de manière à déterminer la cote correspondant aux dimensions de l'espace et à les garder en mémoire.

L'invention concerne également un procédé de détermination d'un nombre de filaments dans un toron au moyen d'une installation telle que décrite ci-dessus, caractérisé en ce qu'il comprend les étapes suivantes :
- positionner le toron dans le dispositif,
- actionner le dispositif,
- déterminer le nombre de fils constituant ledit toron.

Le procédé selon l'invention peut comprendre une ou plusieurs des caractéristiques ci-dessous, prises isolément les unes des autres ou en combinaison les unes avec les autres :
- l'ouverture du dispositif de mesure de manière à ce que l'espace présente un diamètre supérieur à celui du toron, après avoir étendu ledit toron sur le métier à tisser,
- le passage du toron à travers l'espace du dispositif,
- l'actionnement les lamelles du dispositif pour refermer l'iris autour du toron de manière à serrer celui-ci entre les lamelles et à ajuster les dimensions de l'espace au diamètre du toron,
- la relève de la cote correspondante au diamètre du toron mesuré,
- la détermination du nombre de filaments formant ledit toron.

Par ailleurs, le dispositif de mesure peut être un diaphragme et les trois dernières étapes peuvent être réalisées de manière automatique.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 montre les fils de chaînes entre le cantre et le métier à tisser,
[Fig. 2] la figure 2 est une illustration schématique d'un exemple de métier à tisser du type Jacquard utilisé pour la réalisation de préformes tridimensionnelles (3D),
[Fig. 3A] la figure 3A est une vue schématique du dispositif de mesure d'un diamètre de toron selon un premier mode de réalisation de l'invention en position ouvert,
[Fig. 3B] la figure 3B est une vue schématique du dispositif de mesure d'un diamètre de toron selon un deuxième mode de réalisation de l'invention en position ouvert,
[Fig. 3C] la figure 3C est une vue schématique du dispositif de mesure d'un diamètre de toron selon un troisième mode de réalisation de l'invention en position ouvert,
[Fig. 3D] la figure 3D est une vue schématique du dispositif de mesure d'un diamètre de toron selon un quatrième mode de réalisation de l'invention en position ouvert.

### Description détaillée de l'invention

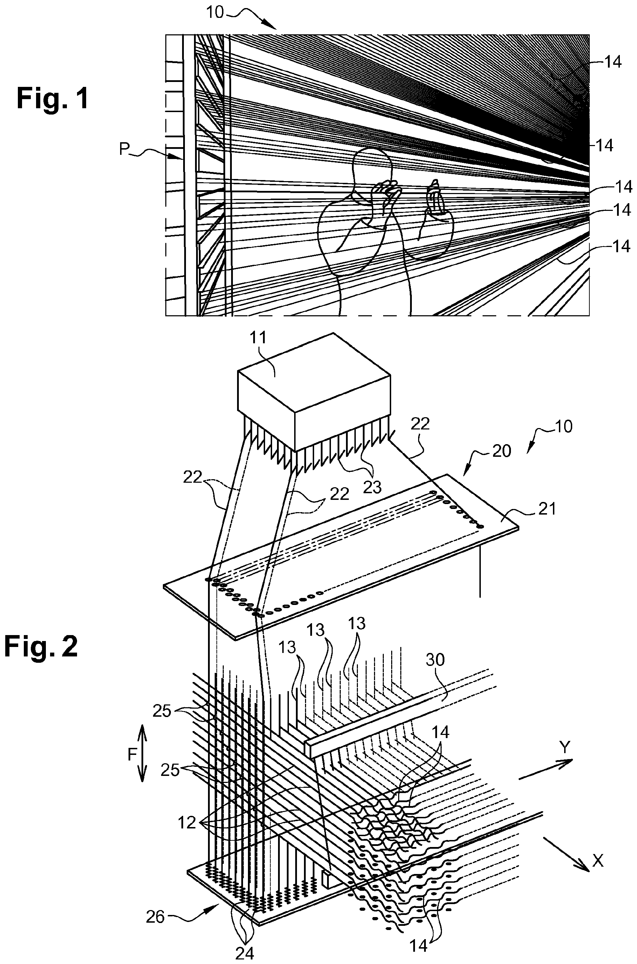

On peut voir sur la figure 2 une installation de tissage comprenant un métier à tisser 10 du type Jacquard 11 classiquement utilisé pour la réalisation de préformes bidimensionnelles (2D) ou tridimensionnelles (3D) obtenues par tissage multicouche entre une pluralité de couches de fils de chaîne 12 et une pluralité de couche de fils de trame 13. Ces fils de chaîne 12 et de trame 13 sont formés par des torons 14. Ces fils de chaîne 12 et de trame 13 sont issus de bobines fixées sur des cantres C de l'installation (voir figure 1). Dans le cas particulier de la présente invention, les fils de chaine 12 et les fils de trame 13 sont de tailles différentes suivant leur positionnement dans la préforme, et donc dans les différents éléments du métier à tisser. Il faut donc pouvoir contrôler que chaque position est montée avec un fil de la bonne taille, c'est-à-dire constitué du bon nombre de filaments. De manière connue, le métier à tisser 10 est donc équipé d'une mécanique Jacquard 11 supportée par une superstructure non représentée sur la figure 2. Le métier 10 comprend également un harnais 20 constitué d'une planche d'empoutage 21 et de fils de commande ou lices 22, chaque lice 22 étant reliée à une extrémité à un crochet de commande 23 de la mécanique Jacquard 11 et à l'autre extrémité à un ressort de rappel 24 fixé au bâti 26 du métier à tisser 10.

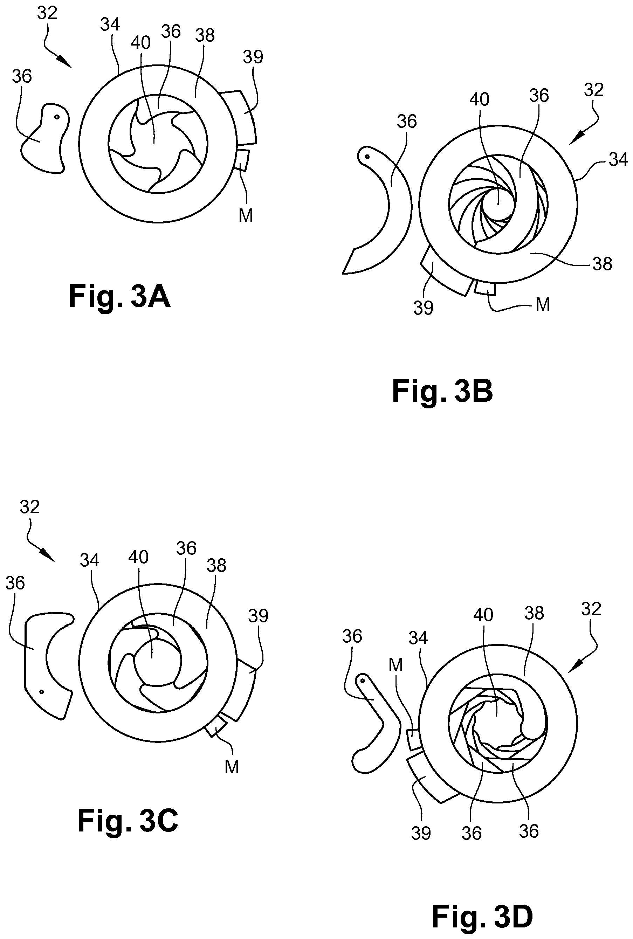

Chaque lice 22 comprend un oeillet 25 traversé par un fil de chaîne 12. Les lices 22 et leurs oeillets 25 associés sont animés d'un mouvement d'oscillation sensiblement vertical représenté par la double flèche F sous les efforts de traction exercés respectivement par les crochets de commande 23 et les ressorts de rappel 24. Les lices 22 permettent de soulever les fils de chaîne 12 et permettent ainsi l'introduction de fils de trame 13. Plus précisément, chaque lice 22 est actionnée et pilotée individuellement, ce qui permet de remonter ou de descendre chaque fil de chaîne 12. Il devient ainsi possible de réaliser l'écartement des fils de chaîne nécessaire au passage d'une lance qui emporte le fil de trame 13, de tisser des motifs complexes et de faire passer les fils de chaîne 12 d'une couche à une autre en permettant la création d'une architecture fibreuse en trois dimensions. Après chaque passage de fil de trame 13, un peigne battant 30 compacte le tissu qui sort du métier 10. L'installation de tissage comporte en outre un dispositif 32 de mesure de diamètre d'un toron 14 comportant un diaphragme 34. Les figures 3A à 3D montrent différents modes de réalisations d'un dispositif 32 comportant chacun un diaphragme 34 différent. Le diaphragme 34 présente une bague externe 38 formant support et des lamelles métalliques 36 montées sur la bague externe 38. Les lamelles 36 sont agencées de manière mobile à l'intérieur de la bague 38 et pour former un iris. Les lamelles 36 permettent de définir, au centre de l'iris du diaphragme 34, une ouverture formant un espace 40 de dimensions variables. Les diaphragmes 34 des figures 3A à 3D sont donc des diaphragmes à iris. Ce type de diaphragme permet un réglage continu des lamelles 36 de manière à permettre une variation continue de l'espace 40 entre une pleine ouverture et une pleine fermeture de l'iris. Ce type de diaphragme 34 est classiquement utilisé dans le domaine de la photographie.

Un diaphragme 34 à iris est classiquement constitué d'un ensemble de lamelles métalliques 36 dont la tranche décrit un polygone régulier. L'ouverture ou la fermeture du diaphragme 34 à iris est contrôlée par des ergots (non représentés) placés sur la bague 38 du diaphragme 34. De cette manière, il est possible de contrôler mécaniquement l'ouverture ou la fermeture du diaphragme 34 uniquement avec un élément de contrôle 39 placé sur la bague 38 du diaphragme 34.

Le nombre et la forme de lamelles 36 composant l'iris est variable : plus leur nombre est grand plus l'ouverture 18 est circulaire.

Il est ainsi possible, en réglant l'ouverture de l'iris (et donc les dimensions de l'espace 40) du diaphragme 34, de contraindre un toron 14 sur sa section.

Comme mentionné plus haut, un toron 14 est composé de filaments et, de manière logique, plus le toron 14 comporte de filaments, plus il est épais. Ainsi, les dimensions de l'espace 40 formé au centre de l'iris du diaphragme 34 permettent de déterminer le diamètre du toron 14 et donc d'en déterminer le nombre de filaments.

Les lamelles 36 permettent de réunir tous les filaments dans une zone précise au sein de l'espace 40. Les filaments formant le toron 14 sont ainsi confinés dans une zone réduite par les lamelles 36 de l'iris. Ils sont ainsi pressés entre eux et occupent un volume réduit, encerclés par les lamelles 36 de l'iris du diaphragme 34. En mesurant le diamètre de l'espace 40, on accède ainsi au diamètre du toron 14. Le diamètre mesuré correspond à un nombre de filaments, ces derniers n'étant pas compressibles.

L'élément de contrôle 39 du diaphragme 34 peut être une graduation, permettant le relevé d'une cote par un opérateur. Dans un mode de réalisation, le dispositif 32 est motorisé. Le diaphragme 34 comprend ainsi un moteur M relié à l'élément de contrôle 39.

De manière connue en soi (et exposé en détail dans le document FR2684460A1), le moteur M met l'iris du diaphragme 34 en action sous le contrôle de l'élément de contrôle 39, par exemple un microprocesseur comportant un compteur. Le compteur permet de compter le nombre de tours du moteur. Ceci permet de calculer la superficie d'ouverture de l'iris, donc de l'espace 40. L'information issue du compteur est transmise à l'élément de contrôle 39, ici le microprocesseur. L'élément de contrôle 39 peut comprendre une mémoire dans laquelle sont stockées plusieurs valeurs de référence de diamètres. Une comparaison est alors réalisée de manière à déterminer le diamètre exact du toron 14. Le microprocesseur est ainsi configuré de manière à déterminer la cote correspondant aux dimensions de l'espace 40 et à les garder en mémoire.

Dans le cas de la présente invention, le dispositif de mesure 32 peut être positionné directement sur le métier à tisser 10 au niveau des cantres C. Dans ce mode de réalisation, l'opérateur passe le toron 14 dans plusieurs oeillets 25 afin de le guider vers le diaphragme 34 du dispositif 32 et de le faire passer au travers de l'espace 40. Dans le cas des trames, chaque position peut être équipé d'un tel dispositif de manière à avoir une mesure automatisée et régulière du diamètre du fil de trame tissé, donc du nombre de filaments le constituant

Ainsi, un opérateur peut vérifier que le toron 14 inséré dans le diaphragme 34 du dispositif 32 présente le bon diamètre (et donc le bon nombre de filaments). Si le diamètre est celui attendu, l'opérateur peut autoriser le commencement/la poursuite du tissage.

En cas d'automatisation/motorisation de la fermeture ou ouverture de l'iris du diaphragme 34 du dispositif 32, trois fonctions peuvent être ajoutées à la mesure de nombre de filaments :
- premièrement, un couple de moteur pouvant être géré, il est possible de contraindre le toron 14 dans l'espace 40 du diaphragme 34 avec une force reproductible. Ceci permet notamment de s'affranchir des variations de force entre opérateurs,
- deuxièmement, une automatisation permet d'obtenir un retour d'information automatique sur les dimensions de l'espace 40 du diaphragme 34 et d'avoir directement accès au nombre de filaments du toron 14 via la mesure diamètre de l'espace 40 par le microprocesseur. Cette information peut alors être traitée directement par le métier à tisser 10 et l'installation peut, sans nécessiter l'intervention d'un opérateur, autoriser ou non la poursuite du tissage, par exemple dans le cas d'un changement d'une bobine de toron 14,
- la validité du contrôle peut être enregistrée dans une mémoire de l'élément de contrôle 39.

Ainsi, à chaque nouvelle chaîne, l'ensemble des torons 14 sont validés un à un par comptage du nombre de filaments. L'utilisation d'un tel dispositif 10 permet de gagner du temps sur le contrôle et d'en améliorer la fiabilité.

Ainsi, pour déterminer le nombre de filaments composant un toron 14 au moyen du de l'installation de tissage, les étapes suivantes sont réalisées :
- fixer le dispositif de mesure 32 sur un métier à tisser 10,
- étendre le toron 14 sur le métier à tisser 10,
- passer le toron 14 à travers l'espace 40 de l'iris du diaphragme 34 du dispositif de mesure 32,
- refermer le dispositif 32 autour du toron 14 de manière à serrer celui-ci entre les lamelles 14 du diaphragme 34 du dispositif 32,
- déterminer le diamètre du toron 14 :
- lire la cote correspondante au diamètre du toron 14 mesuré,
- en déduire le nombre de filaments formant ledit toron 14.

L'étape de détermination du diamètre du toton 14 comprend la lecture de la cote indiquée par l'élément de contrôle 39. Cette lecture est soit réalisée par un opérateur, soit automatisée.

La solution technique apportée ici est facile à mettre en oeuvre et permet de déterminer aisément le nombre de filaments composant un toron 14 donnée et ainsi rapidement savoir s ledit toron 14 a été fixé au bon endroit sur le métier à tisser 10.

## Revendications

1. Installation de tissage comprenant :
- un métier à tisser (10) destiné à recevoir une série de torons (14), et
- au moins un dispositif (32) de mesure de diamètre d'un toron (14) comportant un nombre défini de filaments, le dispositif (32) comportant un diaphragme (34) présentant une bague externe (38) formant support sur laquelle sont fixées une série de lamelles (36) formant iris, les lamelles (36) étant mobiles et permettant de définir, au centre de l'iris, un espace (40) sensiblement circulaire de dimensions variables,
le diaphragme (34) étant configuré pour ajuster les dimensions de l'espace (40) de manière à :
- permettre à un toron (14) du métier à tisser de le traverser, et
- d'enserrer le profil du toron (14), de sorte à permettre la détermination du nombre de filaments dudit toron (14).

2. Installation selon la revendication précédente, **caractérisée en ce que** les lamelles (36) de l'iris du diaphragme (34) occupent une première position dans laquelle les lamelles (36) enserrent le toron (14) de manière à comprimer les filaments entre eux dans l'espace (40) au centre de l'iris.

3. Installation selon l'une quelconque des revendications précédentes, **caractérisée en ce que** le dispositif (32) est fixé au métier à tisser (10).

4. Installation selon l'une quelconque des revendications précédentes, **caractérisé en ce que** le dispositif (32) comporte un élément de contrôle (39).

5. Installation selon la revendication précédente, **caractérisée en ce que** l'élément de contrôle (39) est une graduation permettant un relevé de cote.

6. Installation selon la revendication 5, **caractérisé en ce que** l'élément de contrôle (39) est un microprocesseur et **en ce que** le diaphragme (34) comprend un moteur (M) relié au microprocesseur.

7. Installation selon la revendication précédente, **caractérisée en ce que** le microprocesseur est configuré de manière à déterminer la cote correspondant aux dimensions de l'espace (40) et les garde en mémoire.

8. Procédé de détermination d'un nombre de filaments dans un toron (14) au moyen d'une installation selon l'une quelconque des revendications précédentes, **caractérisé en ce qu'**il comprend les étapes suivantes :
- positionner le toron (14) dans le dispositif (32) de mesure,
- actionner le dispositif (32),
- déterminer le nombre de fils constituant ledit toron (14).

9. Procédé selon la revendication précédente, comportant en outre les étapes suivantes :
- l'ouverture du dispositif (32) de mesure de manière à ce que l'espace (40) présente un diamètre supérieur à celui du toron (14), après avoir étendu ledit toron (14) sur le métier à tisser (10),
- le passage du toron (14) à travers l'espace (40) du dispositif (32),
- l'actionnement les lamelles (36) du dispositif (32) pour refermer l'iris autour du toron (14) de manière à serrer celui-ci entre les lamelles (36) et à ajuster les dimensions de l'espace (40) au diamètre du toron (14),
- la relève de la cote correspondante au diamètre du toron (14) mesuré,
- la détermination du nombre de filaments formant ledit toron (14).

10. Procédé selon la revendication précédente, **caractérisé en ce que** le dispositif (32) de mesure est un diaphragme (34) et **en ce que** les trois dernières étapes sont réalisées de manière automatique.

## Patentansprüche

1. Webanlage, umfassend:
- eine Webmaschine (10), die dazu bestimmt ist, eine Reihe von Strängen (14) aufzunehmen, und
- mindestens eine Vorrichtung (32) zum Messen des Durchmessers eines Strangs (14), der eine definierte Anzahl von Filamenten umfasst, wobei die Vorrichtung (32) eine Blende (34) umfasst, die einen äußeren Ring (38) aufweist, der einen Träger bildet, an dem eine Reihe von Lamellen (36) befestigt sind, die eine Iris bilden, wobei die Lamellen (36) beweglich sind und es ermöglichen, im Zentrum der Iris einen im Wesentlichen kreisförmigen Raum (40) mit variablen Abmessungen zu definieren,
wobei die Blende (34) so konfiguriert ist, dass sie die Abmessungen des Raums (40) anpasst, um:
- es einem Strang (14) der Webmaschine zu ermöglichen, durch ihn hindurchzugehen, und
- das Profil des Strangs (14) zu umschließen, um das Bestimmen der Anzahl von Filamenten des Strangs (14) zu ermöglichen.

2. Anlage nach dem vorstehenden Anspruch, **dadurch gekennzeichnet, dass** die Lamellen (36) der Iris der Blende (34) eine erste Position einnehmen, in der die Lamellen (36) den Strang (14) umschließen, um die Filamente in dem Raum (40) im Zentrum der Iris zusammenzudrücken.

3. Anlage nach einem der vorstehenden Ansprüche, **dadurch gekennzeichnet, dass** die Vorrichtung (32) an der Webmaschine (10) befestigt ist.

4. Anlage nach einem der vorstehenden Ansprüche, **dadurch gekennzeichnet, dass** die Vorrichtung (32) ein Steuerelement (39) umfasst.

5. Anlage nach dem vorstehenden Anspruch, **dadurch gekennzeichnet, dass** das Steuerelement (39) eine Skala ist, die ein Ablesen des Maßes ermöglicht.

6. Anlage nach Anspruch 5, **dadurch gekennzeichnet, dass** das Steuerelement (39) ein Mikroprozessor ist, und dass die Blende (34) einen Motor (M) umfasst, der mit dem Mikroprozessor verbunden ist.

7. Anlage nach dem vorstehenden Anspruch, **dadurch gekennzeichnet, dass** der Mikroprozessor so konfiguriert ist, dass er das Maß bestimmt, das den Abmessungen des Raums (40) entspricht, und diese im Speicher behält.

8. Verfahren zum Bestimmen einer Anzahl von Filamenten in einem Strang (14) mittels einer Anlage nach einem der vorstehenden Ansprüche, **dadurch gekennzeichnet, dass** es die folgenden Schritte umfasst:
- Positionieren des Strangs (14) in der Messvorrichtung (32),
- Betätigen der Vorrichtung (32),
- Bestimmen der Anzahl von Fäden, aus denen der Strang (14) besteht.

9. Verfahren nach dem vorstehenden Anspruch, das weiter die folgenden Schritte umfasst:
- Öffnen der Messvorrichtung (32), sodass der Raum (40) einen Durchmesser aufweist, der größer ist als der des Strangs (14), nachdem der Strang (14) auf der Webmaschine (10) ausgebreitet wurde,
- Hindurchführen des Strangs (14) durch den Raum (40) der Vorrichtung (32),
- Betätigen der Lamellen (36) der Vorrichtung (32), um die Iris um den Strang (14) herum zu schließen, um diesen zwischen den Lamellen (36) einzuspannen und die Abmessungen des Raums (40) an den Durchmesser des Strangs (14) anzupassen,
- Ablesen des Maßes, das dem gemessenen Durchmesser des Strangs (14) entspricht,
- Bestimmen der Anzahl von Filamenten, die den Strang (14) bilden.

10. Verfahren nach dem vorstehenden Anspruch, **dadurch gekennzeichnet, dass** die Messvorrichtung (32) eine Blende (34) ist, und dass die letzten drei Schritte automatisch ausgeführt werden.

## Claims

1. A weaving installation comprising:
- a loom (10) intended to receive a series of strands (14), and
- at least one device (32) for measuring the diameter of a strand (14) comprising a defined number of filaments, the device (32) comprising a diaphragm (34) comprising an external ring (38) forming a support on which are attached a series of strips (36) forming an iris, the strips (36) being movable and allowing defining, at the centre of the iris, a substantially circular space (40) with variable dimensions,
the diaphragm (34) being configured to adjust the dimensions of the space (40) so as to:
- allow a strand (14) of the loom to pass through it, and
- encircle the profile of the strand (14), so as to allow the number of filaments of said strand (14) to be determined.

2. The installation according to the preceding claim, **characterised in that** the strips (36) of the iris of the diaphragm (34) occupy a first position in which the strips (36) encircle the strand (14) so as to compress the filaments between them in the space (40) in the centre of the iris.

3. The installation according to any of the preceding claims, **characterised in that** the device (32) is attached to the loom (10).

4. The installation according to any of the preceding claims, **characterised in that** the device (32) comprises a control element (39).

5. The installation according to the preceding claim, **characterised in that** the control element (39) is a scale allowing a measurement of a dimension to be taken.

6. The installation according to claim 5, **characterised in that** the control element (39) is a microprocessor and **in that** the diaphragm (34) comprises a motor (M) connected to the microprocessor.

7. The installation according to the preceding claim, **characterised in that** the microprocessor is configured in such a way as to determine the dimension corresponding to the dimensions of the space (40) and to keep them in memory.

8. A method for determining a number of filaments in a strand (14) by means of an installation according to any of the preceding claims, **characterised in that** it comprises the following steps:
- positioning the strand (14) in the measuring device (32),
- activating the device (32),
- determining the number of threads constituting said strand (14).

9. The method according to the preceding claim, further comprising the following steps:
- opening the measuring device (32) so that the space (40) has a larger diameter than that of the strand (14), after laying said strand (14) on the loom (10),
- passing the strand (14) through the space (40) of the device (32),
- actuating the strips (36) of the device (32) to close the iris around the strand (14) so as to clamp it between the strips (36) and to adjust the dimensions of the space (40) to the diameter of the strand (14),
- reading the dimension corresponding to the diameter of the measured strand (14),
- determining the number of filaments forming said strand (14).

10. The method according to the preceding claim, **characterised in that** the measuring device (32) is a diaphragm (34) and **in that** the last three steps are performed automatically.
